# EUROPÄISCHE PATENTSCHRIFT

(11) **EP 2 464 715 B1**
(45) Veröffentlichungstag und Bekanntmachung des Hinweises auf die Patenterteilung: **01.10.2014**
(21) Anmeldenummer: 10744530.6
(22) Anmeldetag: 12.08.2010
(51) Int. Cl.: C11C 3/10

(54) **VERFAHREN ZUR HERSTELLUNG VON BIODIESEL DURCH SAURE UMESTERUNG SOWIE DIE VERWENDUNG EINER SULFONSÄURE ALS KATALYSATOR BEI DER HERSTELLUNGEN VON BIODIESEL**
METHOD FOR MANUFACTURING BIODIESEL BY ACID TRANSESTERIFICATION, AND USE OF SULPHONIC ACID AS A CATALYST IN THE MANUFACTURE OF BIODIESEL
PROCÉDÉ DE PRODUCTION DE BIODIESEL PAR TRANSESTÉRIFICATION ACIDE ET UTILISATION D'UN ACIDE SULFONIQUE EN TANT QUE CATALYSEUR LORS DE LA PRODUCTION DE BIODIESEL

(30) Priorität: 14.08.2009 DE 102009037579
(43) Veröffentlichungstag der Anmeldung: 20.06.2012
(73) Patentinhaber: inaChem GmbH, 51519 Odenthal (DE)
(72) Erfinder: BÖGER, Uwe, 51375 Leverkusen (DE); BECHER, Uwe, 42799 Leichlingen (DE); INGENDOH, Axel, 51519 Odenthal (DE)
(74) Vertreter: Kirchner, Christian
(86) Internationale Anmeldenummer: PCT/EP2010/004950
(87) Internationale Veröffentlichungsnummer: WO 2011/018228

(56) Entgegenhaltungen:
- WO-A1-2008/092207
- WO-A1-2009/115274
- DE-A1- 19 908 978
- DATABASE WPI Week 200839 Thomson Scientific, London, GB; AN 2008-G19256 XP002611039, & KR 2007 104 040 A (ISU CHEM CO LTD) 25. Oktober 2007 (2007-10-25)
- DATABASE WPI Week 200959 Thomson Scientific, London, GB; AN 2009-M81923 XP002611037, & CN 101 503 628 A (SHANXI HUADUN IND CO LTD) 12. August 2009 (2009-08-12)

## Beschreibung

Die vorliegende Erfindung betrifft die Herstellung von Biodiesel unter Einsatz einer aliphatischen organischen Sulfonsäure als Katalysator für eine Umesterungsreaktion von Pflanzenölen zu Biodiesel, bei der keine Nebenreaktionen auftreten.

Biodiesel oder Fettsäurealkylester, insbesondere Fettsäuremethylester wird in zunehmenden Maße als eine Alternative zum herkömmlichen Dieselkraftstoff eingesetzt. Er hat sich als regenerativer und CO2 neutraler Kraftstoff der ersten Generation etabliert.

Die Herstellung erfolgt fast ausschließlich durch Umesterung von Pflanzenölen wie beispielsweise Palmöle, Rapsöl, Sojaöl oder Sonnenblumenöl (Fettsäureglyceriden) mit Methanol zu Fettsäuremethyl- oder ethylestern durch Katalyse von Basen wie NaOH, KOH; Natrium- oder Kaliummethylat.

Nachteile der alkalische Umesterung sind aber zum einen der hohe Anfall von Salzen, da die katalytischen Mengen Base (1-5Gew%) vor der Entsorgung mit anorganischen Säuren neutralisiert werden müssen. Die Glycerinphase, ist als Nebenprodukt mit diesen Salzen beladen, und muss gereinigt werden muss, z.B. durch Destillation. Wasser und/oder freie Fettsäure vor der Umesterung aufwendig entfernt werden, da dies zur Bildung von Seifen führt, die im Verfahren stört. Der Katalysator ist durch die Neutralisation verloren und kann nicht rückgeführt werden. Auch gelingt die Herstellung der Ethylester (z.B. mit Bioethanol) nach der alkalischen Umesterung deutlich schlechter.

In geringem Umfang wird Biodiesel auch durch saure Umesterung hergestellt, wobei bislang, in der Praxis, lediglich anorganische starke Säuren wie Mineralsäuren verwendet wurden. Dadurch können teilweise die Probleme der alkalischen Umesterung umgangen werden, gleichzeitig hat die Umesterung mit anorganischen Mineralsäuren aber folgende Verfahrensnachteile: Schwefelsäure, wirkt nicht nur säurekatalytisch sondern bei den notwendigen höheren Temperaturen auch sulfonierend und dehydratisierend, so dass die Fettsäuren partiell sulfoniert werden und bei höheren Temperaturen durch Dehydratisierung verkoksen.

Salzsäure erfordert aufwendige Werkstoffe in der Verarbeitungsanlage wegen der Korrosionsneigung und außerdem ist die Nebenreaktion der Chlormethanbildung aus dem Methanol erheblich.

Weitere Säuren wie Phosphorsäure, Salpetersäure verbieten sich aus Sicherheitsund Umweltgründen.

WO 2008/092207 offenbart estervegetabile Fettsäuren aus Reiskleie, welche durch Umesterung von Reiskleie mit niederen Alkylalkoholen wie beispielsweise Methanol oder Ethanol unter Einwirkung von Sulfonsäuren wie z. B. Methansulfonsäure hergestellt werden können. Diese Ester können in Biodiesel verwendet werden.

DE 199 08 978 betrifft ein kontinuierliches Verfahren, mit dessen Hilfe gleichzeitig die Veresterung von freien Fettsäuren und die Umesterung von Triglyceriden mit Methanol zu Methylestern bei Normaldruck und Temperaturen von 50 °C bis 89 °C vorgenommen wird. Als Katalysatoren sind dort verschiedene Alkyl-, Aryl- oder Alkylarylsulfonsäuren offenbart. Auch diese Ester können als Biosdiesel verwendet werden.

AN 2008-619256 (CR 2007-0104040) offenbart ein Verfahren zur Herstellung von Biodiesel, bei welchem Öle mit Alkoholen in Gegenwart von Alkylsulfonsäuren mit 5- bis 25 Kohlenstoffatomen umgesetzt werden.

AN 2009-M81923 (CN 101 503 628) offenbart ein Verfahren zur Herstellung von Biodiesel durch Umesterungsreaktion eines vegetabilen Öls mit Methanol unter der Einwirkung eines selten Erdsalzes der Trifluormethansulfonsäure bei einer Temperatur von 40 bis 100 °C.

Aufgabe der vorliegenden Erfindung war es daher, ein neues Verfahren zur Herstellung von Biodiesel aufzufinden, welches die genannten Nachteile des bisherigen Standes der Technik nicht mehr aufweist und insbesondere im Wesentlichen frei von Nebenreaktionen ist.

Es wurde nun überraschend gefunden, dass die erwähnten Nachteile der Mineralsäuren bei der saueren Umesterung vollständig vermieden werden können und gleichzeitig die Nachteile eine alkalischen Umesterung nicht mehr auftreten, wenn als sauerer Katalysator eine organische Sulfonsäure verwendet wird.

Gegenstand der Erfindung ist daher ein Verfahren zur Herstellung von Biodiesel (Fettsäurealkylester) durch saure Umesterung eines natürlichen Öles mit einem Alkanol, wobei das Alkanol Methanol und/oder Ethanol ist und wobei Methansulfonsäure als Katalysator eingesetzt wird, dadurch gekennzeichnet, dass das natürliche Öl, das Alkanol, und die Methansulfonsäure in einem verschlossenen Autoklav auf eine Temperatur zwischen 100 und 130°C erhitzt werden.

Besonders bevorzugt ist die Verwendung von Alkoholen mit einem Wassergehalt von bis zu 5 Gew% Wasser im Alkohol (5% g/g). Überraschenderweise führt die Gegenwart von Wasser in der Umesterung nicht zu einer geringeren Ausbeute an Biodiesel.

Im erfindungsgemäßen Verfahren wird ein natürliches Öl unter Säurebedingungen ver- und umgeestert. Unter natürlichen Ölen werden dabei pflanzliche Öle wie Rapsöl, Sojaöl, Palmöle oder andere Pflanzenöle aber auch Altspeiseöle, z. B. aus der Nahrungsmittelherstellung, und tierische Fette erstanden. Chemisch handelt es sich da bei diesen natürlichen Ölen um Fettsäureglyceride. Bevorzugt werden im erfindungsgemäßen Verfahren pflanzliche Öle eingesetzt. Besonders bevorzugt sind dabei pflanzliche Öle wie Rapsöl und Sojaöl. Besonders bevorzugt werden Öle aus Alt- und Gebrauchtfetten, sowie Tieröle, die naturgemäss einen hohen Anteil freier Fettsäuren enthalten.

Im erfindungsgemäßen Verfahren wird Methansulfonsäure eingesetzt. Ublicherweise wird dabei Methansulfonsäure mit einem Gehalt an Methansulfonsäure größer 98 Gew.-% eingesetzt. Aber auch Methansulfonsäure als Azeotrop-Destillat mit einem Gehalt von ca. 70 Gew.-% an Methansulfonsäure ist möglich.

Das erfindungsgemäße Verfahren wird so durchgeführt, dass das natürliche Öl, z. B. Rapsöl oder Sojaöl, und das Alkanol, z. B. Methanol oder Ethanol, und die aliphatische Sulfonsäure der genannten Formel vorgelegt werden, der Autoklav verschlossen wird und auf eine Temperatur zwischen 100 and 130 Grad Celsius, besonders bevorzugt zwischen 110 und 125 Grad Celsius, erwärmt wird. Durch die Erwärmung stellt sich im Autoklav ein erhöhter Druck, üblicherweise im Bereich von 1,5 bis 4,5 bar ein. Die Reaktionslösung wird dann bei dieser Temperatur für eine Zeitdauer von ca. 80 bis 120 Minuten gerührt. Anschließend wird das überschüssige Alkanol abdestilliert, die Phasen der Reaktionslösung getrennt und die Biodieselphase mit Wasser gewaschen. Aus der Biodieselphase wird dann das Restwasser, z. B. durch Destillation (Anstrippen) entfernt. Üblicherweise erhält man mit dem erfindungsgemäßen Verfahren Biodiesel mit einer Ausbeute von über 90%.

Im Gegensatz zu den bisherigen Verfahren des Standes der Technik erhält man nach dem erfindungsgemäßen Verfahren keinen unerwünschten hohen Anfall von Salzen, wie z. B. bei alkalischen Umesterung anfällt und auch die unerwünschten Nebenreaktionen, wie sie bei der sauren Umesterung mit Mineralsäuren nach dem Stand der Technik (z. B. partielle Sulfonierung der Fettsäuren bei Einsatz von Schwefelsäuren; Chlormethanbildung bei Salzsäure) beobachtet werden, können vermieden werden. Außerdem können im erfindungsgemäßen Verfahren Pflanzenöle mit höherem Wassergehalt und Anteilen an freien Fettsäuren eingesetzt werden. Unerwünschte Seifenbildung wird aufgrund der sauren Umesterung vermieden. Unter den Verfahrensbedingungen wird das Enstehen von Acrolein aus dem Glycerin nicht beobachtet. Ebenso kann der Wasssergehalt des Reaktionsgemisches bis zu 5% betragen, ohne dass Ausbeuteverluste entstehen, wobei es gleich ist, ob das Wasser mit dem Öl, der Katalysatorsäure oder den Alkanolen eingebracht wird.

Die folgenden Beispielen sollen die Erfindung erläutern, ohne sie jedoch in ihrem Umfang zu beschränken.

### Beispiele

### Beispiel 1:

### Herstellung von Biodiesel (Fettsäuremethylester) aus Rapsöl mit Methansulfonsäure 99% als Katalysator

In einem 1,3 L Emaille-Autoklav wurden 600 g Rapsöl, 130,4 g Methanol und 12,1 g Methansulfonsäure (99%) vorgelegt. Der Autoklav wurde verschlossen und auf 110°C erwärmt. Dabei stellte sich ein Druck von 3,6 bar ein. Es wurde 100 Minuten bei 110°C nachgerührt. Überschüssiges Methanol wurde abdestilliert, die Phasen getrennt und die Biodieselphase 2* mit 100 ml Wasser gewaschen. Restwasser wurde durch kurzes Anstrippen entfernt und es verblieben 599 g Biodiesel mit einem Umsetzungsgrad von 96,6% (HPLC; Gew%), was einer Ausbeute von 96% der Theorie entspricht.

### Beispiel 2:

### Herstellung von Biodiesel (Fettsäuremethylester) aus Sojaöl mit Methansulfonsäure 99% als Katalysator

In einem 1,3 L Emaille-Autoklav wurden 600 g Sojaöl, 130,4 g Methanol und 12,1 g Methansulfonsäure (99%) vorgelegt. Der Autoklav wurde verschlossen und auf 120°C erwärmt. Dabei stellte sich ein Druck von 4,2 bar ein. Es wurde 120 Minuten bei 120°C nachgerührt. Überschüssiges Methanol wurde abdestilliert, die Phasen getrennt und die Biodieselphase 2* mit 100 ml Wasser gewaschen. Restwasser wurde durch kurzes Anstrippen entfernt und es verblieben 595 g Biodiesel mit einem Umsetzungsgrad von 93,6% (HPLC; Gew%), was einer Ausbeute von 92% der Theorie entspricht.

### Beispiel 3:

### Herstellung von Biodiesel (Fettsäuremethylester) aus Sojaöl mit Methansulfonsäure 70% (azeotrop) als Katalysator

In einem 1,3 L Emaille-Autoklav wurden 600 g Sojaöl, 130,4 g Methanol und 17,1 g Methansulfonsäure (70%) vorgelegt. Der Autoklav wurde verschlossen und auf 120°C erwärmt. Dabei stellte sich ein Druck von 4,2 bar ein. Es wurde 240 Minuten bei 120°C nachgerührt. Überschüssiges Methanol wurde abdestilliert, die Phasen getrennt und die Biodieselphase 2* mit 100 ml Wasser gewaschen. Restwasser wurde durch kurzes Anstrippen entfernt und es verblieben 590 g Biodiesel mit einem Umsetzungsgrad von 96,9% (HPLC; Gew%), was einer Ausbeute von 94% der Theorie entspricht.

### Beispiel 4:

### Herstellung von Biodiesel (Fettsäureethylester) aus Rapsöl mit Methansulfonsäure 99% als Katalysator und Ethanol

In einem 1,3 L Emaille-Autoklav wurden 600 g Rapsöl, 187,5 g Ethanol und 12,1 g Methansulfonsäure (99%) vorgelegt. Der Autoklav wurde verschlossen und auf 110°C erwärmt. Dabei stellte sich ein Druck von 1,6 bar ein. Es wurde 100 Minuten bei 110°C nachgerührt. Überschüssiges Ethanol wurde abdestilliert, die Phasen getrennt und die Biodieselphase 2* mit 100 ml Wasser gewaschen. Restwasser wird durch kurzes Anstrippen entfernt und es verblieben 615 g Biodiesel mit einem Umsetzungsgrad von 97,6% (HPLC; Gew%), was einer Ausbeute von 95% der Theorie entspricht.

### Beispiel 5:

### Herstellung von Biodiesel (Fettsäuremethylester) aus Rapsöl mit 10% freie Fettsäure mit Methansulfonsäure 99% als Katalysator

In einem 1,3 L Emaille-Autoklav wurden 540 g Rapsöl, 60 g Ölsäure, 141,9 g Methanol und 10,9 g Methansulfonsäure (99%) vorgelegt. Der Autoklav wurde verschlossen und auf 120°C erwärmt. Dabei stellte sich ein Druck von 3,8 bar ein. Es wurde 100 Minuten bei 120°C nachgerührt. Überschüssiges Methanol wurde abdestilliert, die Phasen getrennt und die Biodieselphase 2* mit 100 ml Wasser gewaschen. Restwasser wurde durch kurzes Anstrippen entfernt und es verblieben 600,7 g Biodiesel mit einem Umsetzungsgrad von 96,8% (HPLC; Gew%), was einer Ausbeute von 97% der Theorie entspricht.

### Beispiel 6 (Vergleichsbeispiel):

### Herstellung von Biodiesel (Fettsäuremethylester) aus Sojaöl mit Perfluorbutansulfonsäure als Katalysator

In einem 0,3 L Emaille-Autoklav wurden 140 g Sojaöl, 30,5 g Methanol und 2,8 g Perfluorbutansulfonsäure vorgelegt. Der Autoklav wurde verschlossen und auf 120°C erwärmt. Dabei stellte sich ein Druck von 4,0 bar ein. Es wird 360 Minuten bei 120°C nachgerührt. Überschüssiges Methanol wurde abdestilliert, die Phasen getrennt die Biodieselphase 2* mit 30 ml Wasser gewaschen. Restwasser wurde durch kurzes Anstrippen entfernt und es verblieben 94,5 g Biodiesel mit einem Umsetzungsgrad von 93,6% (HPLC; Gew%), was einer Ausbeute von 88,5% der Theorie entspricht.

## Patentansprüche

1. Verfahren zur Herstellung von Biodiesel (Fettsäurealkylester) durch saure Umesterung eines natürlichen Öls mit einem Alkanol, wobei das Alkanol Methanol und/oder Ethanol ist, wobei Methansulfonsäure als Katalysator eingesetzt wird,
**dadurch gekennzeichnet, dass** das natürliche Öl, das Alkanol und die Methansulfonsäure in einem verschlossenen Autoklav auf eine Temperatur zwischen 100 und 130 °C erhitzt werden.

2. Verfahren nach Anspruch 1, **dadurch gekennzeichnet, dass** die Methansulfonsäure einen Gehalt größer 98 Gew.-% aufweist oder ein Methansulfonsäure-Azeotrop-Destillat mit einem Gehalt von über 70 Gew.-% ist.

3. Verfahren nach einem der Ansprüche 1 oder 2, **dadurch gekennzeichnet, dass** das natürliche Öl ein Pflanzenöl ist.

4. Verfahren nach Anspruch 3, **dadurch gekennzeichnet, dass** das Pflanzenöl Sojaöl oder Rapsöl ist.

5. Verfahren gemäß einem der Ansprüche 1 oder 2, **dadurch gekennzeichnet, dass** das natürliche Öl ein Tierfett oder ein Altfett ist.

6. Verfahren nach einem der vorstehenden Ansprüche, **dadurch gekennzeichnet, dass** das Methanol und das Ethanol bis zu 5 Gew.-% Wasser enthalten.

7. Verfahren nach einem der Ansprüche 1 bis 5, **dadurch gekennzeichnet, dass** der Wassergehalt des Reaktionsgemisches bis 5 % betragen kann, wobei es gleich ist, ob das Wasser mit dem Öl, der Katalysatorsäure oder den Alkanolen eingebracht wird.

## Claims

1. Method for manufacturing biodiesel (fatty acid alkyl ester) by acid transesterification of a natural oil with an alkanol, wherein the alkanol is methanol and/or ethanol, wherein methane sulfonic acid is used as a catalyst,
**characterized in that**
the natural oil, the alkanol and the methane sulfonic acid are heated inside a closed autoclave to a temperature between 100 °C and 130 °C.

2. Method according to claim 1, **characterized in that** the methane sulfonic acid comprises a concentration greater than 98 % by weight or an azeotropic distillate of methane sulfonic acid having a concentration greater than 70 % by weight.

3. Method according to one of the claims 1 or 2, **characterized in that** the natural oil is a vegetable oil.

4. Method according to claim 3, **characterized in that** the vegetable oil is soy oil or rapeseed oil.

5. Method according to one of the claims 1 or 2, **characterized in that** the natural oil is an animal fat or a waste fat.

6. Method according to one of the preceding claims, **characterized in that** the methanol and the ethanol comprise water up to 5 % by weight.

7. Method according to one of the claims 1 to 5, **characterized in that** the water concentration of the reaction mixture may amount up to 5 % by weight, wherein it is no difference, whether the water is inserted with the oil, the catalytic acid or the alkanols.

## Revendications

1. Procédé pour la préparation de biodiesel (ester alkylique d'acide gras) par trans-estérification acide d'une huile naturelle avec un alcanol, l'alcanol étant du méthanol et/ou de l'éthanol, de l'acide méthanesulfonique étant utilisé comme catalyseur,
**caractérisé en ce que** l'huile naturelle, l'alcanol et l'acide méthanesulfonique sont chauffés dans un autoclave fermé à une température de 100 à 130°C.

2. Procédé selon la revendication 1, **caractérisé en ce que** l'acide méthanesulfonique présente une teneur supérieure à 98 % en masse ou est un acide méthanesulfonique-azéotrope-distillat avec une teneur supérieure à 70 % en masse.

3. Procédé selon l'une quelconque des revendications 1 ou 2, **caractérisé en ce que** l'huile naturelle est une huile végétale.

4. Procédé selon la revendication 3, **caractérisé en ce que** l'huile végétale est de l'huile de soja ou de l'huile de colza.

5. Procédé selon l'une quelconque des revendications 1 ou 2, **caractérisé en ce que** l'huile naturelle est une graisse animale ou une graisse usée.

6. Procédé selon l'une quelconque des revendications précédentes, **caractérisé en ce que** le méthanol et l'éthanol contiennent jusqu'à 5 % en masse d'eau.

7. Procédé selon l'une quelconque des revendications 1 à 5, **caractérisé en ce que** la teneur en eau du mélange réactionnel peut aller jusqu'à 5 %, dans lequel il est égal que l'eau soit introduite avec l'huile, l'acide de catalyseur ou les alcanols.
